# EUROPÄISCHE PATENTSCHRIFT

(11) **EP 2 263 443 B1**
(45) Veröffentlichungstag und Bekanntmachung des Hinweises auf die Patenterteilung: **22.08.2012**
(21) Anmeldenummer: 10166003.3
(22) Anmeldetag: 15.06.2010
(51) Int. Cl.: A01F 25/18, B60C 19/00, E01C 19/27

(54) **Verdichtungseinrichtung für eine Silage in einem Fahr- oder Flachsilo**
Silage compactor in a mobile or flat silo
Dispositif d'étanchéification pour un ensilage dans un silo mobile ou plat

(30) Priorität: 19.06.2009 DE 102009025524
(43) Veröffentlichungstag der Anmeldung: 22.12.2010
(73) Patentinhaber: Rausch, Harry, 95197 Schauenstein (DE)
(72) Erfinder: Rausch, Harry, 95197 Schauenstein (DE)
(74) Vertreter: Pröll, Jürgen

(56) Entgegenhaltungen:
- AU-A- 3 971 468
- DE-A1- 4 208 557
- DE-B- 1 171 770
- DE-B3-102006 012 851
- JP-A- 2007 203 851
- US-A- 2 784 036
- US-A- 4 195 696

## Beschreibung

Die Erfindung betrifft eine Verdichtungseinrichtung für eine Silage in einem Fahr- oder Flachsilo mit einer landwirtschaftlichen Arbeitsmaschine mit den in den Oberbegriffen der Ansprüche 1 und 3 angegebenen Merkmalen.

Aus der DE 42 08 557 A1 ist eine gattungsgemäße Vorrichtung zum Verdichten von verdichtbarem Baugrund, insbesondere für Sportplätze und Wege, mit einem Vorrichtungsrahmen, zumindest einer in dem Vorrichtungsrahmen angeordneten Achse und zumindest einer Verdichtungswalze, bekannt, die an eine Zugmaschine anhängbar ist. Die Verdichtungswalze besteht aus einer Mehrzahl von Kraftfahrzeugrädern mit Nabe, Radscheibe, Felge und Kraftfahrzeugreifen, die mit ihrer Nabe auf die Achse mit einem Ausgleichspiel aufgesetzt sind. Die Kraftfahrzeugreifen sind mit Schwergut oder mit Beton oder Mörtel gefüllt, in die zusätzlich Mineralgranulat, Kies, Sand, Metallgranulat, oder Mischungen davon, beigegeben sind. Das Gesamtgewicht eines solchen Verdichtungsrades wird nur durch den Beton in dem Reifen im Wesentlichen bestimmt. Ein ähnliches, gleich aufgebautes Verdichtungsrad ist aus der JP 2007-203851 A bekannt.

Die Ballastierung von Rädern für Arbeitsmaschinen ist bei Verdichtungsrädern eines Silageverdichters aus der DE 10 2006 012 851 B3 und der DE-AS 1 171 770 bekannt, bei dem die Reifen mit flüssigen oder pulverförmigen Stoffen verfüllt sind.

Weiterhin ist es aus der US 4,195,696 bekannt, Zwillingsräder an Traktorräder zur Verteilung des Flächendruckes anzubringen. Zum besseren Fortbewegen einer Zugmaschine auf einem weichen Boden ist es aus der AU 39 714 bekannt, Zwillingsräder aus metall mit profilierter Lauffläche mittels einer speziellen Kupplung an das Antriebsrad anzukuppeln.

In der Landwirtschaft ist es üblich, organische Stoffe, beispielsweise Futtermittel, wie Gras, gehäckselten Mais, Rübenblätter, in Fahrsilos oder Flächensilos zu lagern. Von erheblicher Bedeutung ist es dabei, dass die organischen Stoffe in dem Silo hochverdichtet gelagert werden, damit der Sauerstoffgehalt gering ist und kein Sauerstoff einzudringen vermag. Bei der Stabilität einer Silage spielt insbesondere die Verdichtung des aufgelagerten Erntegutes eine wichtige Rolle. Wird beim Siloaufbau das neu geschnittene Erntegut nicht permanent und gewissenhaft verdichtet, wird Restsauerstoff in den einzelnen aufgetragenen Erntegutlagen eingeschlossen, welches letztendlich zur Bildung von unerwünschten Organismen wie Hefen und Pilzen und zu Fehlgärungen führen kann, was wiederum den Nährwertgehalt der Silage erheblich mindern kann.

Es sind viele Arten des Abpressens von Gärfutter in Silos bekannt. Neben der Tretarbeit ist, angefangen mit der Beschwerung mit Lehm, Steinen, Wasserbehältern oder schweren Betonplatten usw. bis zur Anwendung von mechanischen, pneumatischen oder hydraulischen Pressen, eine ganze Reihe von Pressmethoden in Anwendung. Allen diesen Pressmitteln ist ein erheblicher Arbeitsaufwand eigen, der zu ihrer Bedienung erforderlich ist, und ferner die Notwendigkeit, sie entweder erst auf die endgültige Oberfläche der Silage aufzubringen, wenn die Miete endgültig gefüllt ist, oder aber sie zwischendurch wieder zu entfernen, um mit der Füllung der Miete fortfahren zu können.

Üblich ist es, mit einem Schlepper auf das Silo zu fahren, wobei das Eigengewicht des Schleppers die Verdichtung bewirken soll. Dieses Verfahren hat sich grundsätzlich bewährt, häufig aber ist das Gewicht des Schleppers unzureichend oder zu groß. Unbefriedigend ist auch, dass das Gewicht des Schleppers und seine Geschwindigkeit von etwa 4 km/h an den Ablauf vom Mähen, Häckseln, Zubringen und Verteilen des gehäckselten Futters auf der Miete angepasst werden muss, so dass keine Leerlaufzeiten entstehen.

Wenn die Verdichtung mit der landwirtschaftlichen Arbeitsmaschine, z. B. einem Schlepper oder Traktor, durchgeführt wird, so wird die Verdichtung des Silagematerials durch das Gewicht des Schleppers einerseits und durch den Luftdruck in den Reifen der einzelnen Räder andererseits im Wesentlichen bestimmt. Die Luft in den Reifen, die mit etwa 2 bar eingegeben ist, bewirkt beispielsweise, dass beim Befahren der Silage eine breitflächigere Auflage mit Nachgiebigkeit gegeben ist und kein erhöhter Druck auf die Verdichtungsfläche ausgeübt wird. In anderen Fällen, insbesondere dann, wenn es sich um die Verdichtung von Maissilage für die Zwischenlagerung für die Herstellung von Biogas handelt, werden auch größere Maschinen, wie Raupen, dazu verwendet, um über die Raupenketten eine Verdichtung zu bewirken. Mit solchen Fahrzeugen kann allerdings, ohne eine flächenhafte Verbreitung zu bewirken, nur hin- und hergefahren werden. Die Kettenfahrzeuge haben allerdings den Vorteil, dass eine höhere Verdichtung realisierbar ist als durch einen Schlepper.

Um das Gewicht des Schleppers oder Traktors zu erhöhen, ist es aus der DE-PS-678 399 bekannt, ein Beschwerungsgewicht aus Beton anzubringen. Dazu werden in die Metallfelge Betonringe eingesetzt. Die Metallfelge steht dabei seitlich hervor.

Beschwerungsgewichte ähnlicher Art sind aus der DE 1 832 327 bekannt. Diese Gewichte werden mittels Schrauben an eine Felge angeschraubt und sind in ihrem Umfang so bemessen, dass sie in die Felge außenseitig einsetzbar sind. Durch diese Maßnahme kann zwar das Gewicht eines Rades erhöht werden und damit auch die Druckkraft. Die Ausgleichsdämpfung über die Oberflächen des walkenden Reifens, der eine intensive Druckeinbringung vermeidet, besteht jedoch fort.

Ein weiterer wesentlicher Nachteil ist, sowohl bei der Verwendung von Schleppern als auch bei anderen Verdichtungsarbeitsmaschinen z. B. einer Raupe oder einem Hoflader, dass die Energiekosten sehr hoch sind. Für die Verdichtung eines befahrbaren Silos gelten vergleichsweise folgende Werte: Der Dieselverbrauch eines Radladers beträgt 0,95 1/t/h pro Stunde je Tonne Fahrzeuggewicht, bei einem Raupentraktor 0,73 1/t/h pro Stunde je Tonne Fahrzeuggewicht für die Verdichtung des Silagematerials.

Aus der DE 102 42 498 A1 ist es bekannt, dass bei einem Fahrzeug eine walzenartige Verdichtungseinrichtung angebracht wird, die unter Druck absenkbar ist und mit der die Silage verdichtet werden kann.

Aus der DE 195 37 085 A1 ist ein gleichartiger Silageverdichter bekannt, der über ein Fahrwerk mit Rahmen, einem Antrieb, einer Hydraulik und angetriebenen Rädern, über ein Verteilergerät und seitliche absenkbare Verdichterwalzen verfügt.

Ein weiterer Silageverdichter wird in der DE 10 2006 012 offenbart. Die Vorrichtung ist mit Fahrwerk, Rahmen, Kabine, Antrieb, Hydraulik und vier angetriebenen Rädern ausgerüstet. Seitlich am Fahrwerk sind ausfahrbare, absenkbare erste Verdichterwalzen und wenigstens eine zwischen den Hinterrädern angeordnete absenkbare zweite Verdichterwalze vorhanden.

Ausgehend vom bekannten Stand der Technik liegt der Erfindung die Aufgabe zugrunde, eine hocheffiziente Verdichtungseinrichtung für ein Fahr- oder Flachsilo vorzuschlagen, die mit einfachen Mitteln und außerordentlich kostengünstig realisierbar ist und ökonomischer einsetzbar ist als die bekannten Verdichtungseinrichtungen.

Die Erfindung löst die Aufgabe durch Ausgestaltung der Verdichtungseinrichtung gemäß der in den nebengeordneten Ansprüchen 1 und 3 angegebenen Lehren. Vorteilhafte Weiterbildungen der Erfindung sind in den abhängigen Unteransprüchen im Detail angegeben.

In einer Ausführungsform ist vorgesehen, dass die Verdichtungseinrichtung mindestens ein schwergewichtiges, drehbar gelagertes Verdichtungsrad aus Beton aufweist, das mit einem Reifen überzogen ist und in einer gabelförmigen Aufnahme oder an einer Zug-/Schiebestange seitlich vorstehend drehbar gelagert ist. Diese Aufnahme oder Zug-/Schiebestange kann an die Arbeitsmaschine, beispielsweise einem Traktor, auch Schlepper genannt, nachlaufend hinten oder vorlaufend vorne angekuppelt sein. Die Erfindung versteht unter "Arbeitsmaschine" alle drei- oder vierrädrigen, motorangetriebenen Transporteinrichtungen, die üblicherweise in einem landwirtschaftlichen Betrieb zum Einsatz kommen, wie Traktoren (Schlepper), Hoflader, Frontlader; diese können allradangetrieben oder einzeln oder paarweise jeweils angetrieben sein.

Im Falle einer nachlaufenden Ankupplung erfolgt dies über die an jedem Traktor vorhandene Kupplung an der Rückseite. Im Falle der vorlaufenden Befestigung können beispielsweise zwei Festpunkte an der Hydraulikaufnahme vorgesehen sein, um die gabelförmige Aufnahme in Bewegungsrichtung des Fahrzeuges vorschieben zu können. Im Falle der Einlegung des Rückwärtsganges wird eine nachlaufende Bewegung erzeugt.

In einer Alternative ist nun auch vorgesehen, dass das Verdichtungsrad entweder als Antriebsrad unmittelbar an die Antriebswelle montiert ist, also ein Antriebsrad ersetzt, zu welchem Zweck die gleichen Bohrungen im Mittenteil zur Herstellung der Schraubverbindung vorzusehen sind. Das Verdichtungsrad kann aber auch anstelle eines mitlaufenden Rades eines nur mit einem Heckantrieb versehenen Traktors z. B. an der Vorderachse drehend angebracht sein. Beispielsweise können beide Vorderräder durch Verdichtungsräder an einem Traktor ersetzt werden. Es können aber auch beide hintere Antriebsräder durch solche Verdichtungsräder ersetzt werden. Alternativ ist es auch möglich, zu einem dieser Radarten ein Zwillingsrad, das zur Reduzierung des Flächendruckes üblicherweise mit dem Antriebsrad verbunden wird, hierfür einzusetzen, das nach der Erfindung aus Beton besteht oder zumindest einen Betonring aufweist, der von dem Reifen umgeben ist. Das Zwillingsrad ist also das schwergewichtige Verdichtungsrad, das in gewünschter Weise die Verdichtung vornimmt. Dieses Verdichtungsrad kann beispielsweise mit 6 bar auf die Silagemasse drücken, ohne dass der Reifen walkt und sich der Oberfläche anpassen kann. Die Druckkraft wird also stets senkrecht voll ausgeübt. Das Profil des Reifens, das auch abgefahren sein kann, bewirkt nur eine griffigere Haftung an der Oberfläche der Silagemassen, so dass das Fahrzeug beim Befahren nicht durchrutschen kann. Ein Nachgeben ist ausgeschlossen. Die volle Druckkraft wirkt also auf die Silagemasse und verdichtet diese in gewünschter Weise.

Selbstverständlich kann auch ein Traktor, der mit Verdichtungsrädern als Zwillingsräder ausgestattet ist, auch mit einer zusätzlichen Verdichtungseinrichtung mit gabelförmiger Aufnahme oder Zug-/Schubstange ausgestattet sein. In einfachster Bauart kann beispielsweise ein altes Rad für einen Traktor als Verdichtungsrad verwendet werden. Dazu wird der von dem auf die Felge aufgezogenen Reifen gebildete Hohlraum mit Beton verfüllt. Um die Kosten zu minimieren, können dabei auch größere Steine in die Betonmasse mit eingebettet werden. Entscheidend ist dabei jedoch, dass der Hohlraum insgesamt ausgegossen wird und der so gebildete Betonring auf der Felge gehalten wird. Da die Felgen aus Stahl bestehen, ist eine sichere Bindung gegeben. Nach außen hin wird der Betonring durch den Reifen nicht nur geprägt, sondern der Reifen bewirkt die gewünschte Haftung auf der Silagemasse beim Befahren des Silos zum Zwecke des Verdichtens. Dabei muss kein ausgeprägtes Profil mehr gegeben sein. Für das rutschfreie Befahren reicht es aus, wenn ein Mindestprofil gegeben ist, um bei ansteigenden Flanken des Fahrsilos auch auf den Masseberg gelangen zu können. Selbstverständlich kann die Felge auch durch einen Betonformkörper ersetzt werden, der, um das Betonrad zu binden, armiert sein sollte, beispielsweise mit Drahtgeflecht. Es versteht sich von selbst, dass in einem solchen Fall konzentrisch die Befestigungsbohrungen anzubringen sind, um Schraubbolzen und dergleichen anbringen zu können, um eine Befestigung an dem Wellenflansch der Antriebswelle oder an einer Felge eines Zwillingsrades vornehmen zu können.

Die Erfindung ist aber nicht nur auf ein Einzelrad und dessen Anordnung beschränkt. Es können beispielsweise auch zwei solche Betonräder oder mehrere solche Betonräder angeordnet sein, um die gewünschte Verdichtung zu bewirken. Dies hängt jeweils von der Größe der Arbeitsmaschine und der gewünschten aktiven Druck-/Rollfläche ab.

Es ist ersichtlich, dass die Erfindung außerordentlich kostengünstig realisierbar ist. Beispielsweise können in die Felge ein oder mehrere Einfülllöcher eingebracht werden, durch die hindurch die Betonmasse eingefüllt wird. Zuvor können auch in den Reifen schon Steine eingelegt sein, ferner eventuelle Armierungen, um die Betonmasse als solche reduzieren zu können und eine hohe Festigkeit zu erreichen. Die Steine können aber auch durch die Einfülllöcher eingebracht werden und/oder mit dem Ausfüllen eingegeben werden. Wenn darüber hinaus der Beton unter Druck eingebracht (gepumpt) wird, kann darüber auch eine Aufweitung des Reifens im möglichen gewünschten Umfang vorgenommen werden. Nach dem Abbinden und Aushärten des Betons ist also ein Verdichtungsrad gegeben, das die gewünschten Anforderungen erfüllt und unbegrenzte Zeit nutzbar ist.

Werden diese Verdichtungsreifen als Zwillingsreifen verwendet, so hat sich gezeigt, dass dadurch eine wesentliche Energieeinsparung gegenüber bekannten Verdichtungseinrichtungen gegeben ist. Der Verbrauch beträgt im Vergleich zu den eingangs beschriebenen Arbeitsmaschinen lediglich 0,32 1/t/h Diesel pro Tonne Fahrzeuggewicht und Betriebsstunde. Dies stellt eine wesentliche Energieeinsparung dar.

Die Vorteile der Erfindung sind offenkundig. Insbesondere kann in wirtschaftlicher Weise mit einem damit ausgestatteten Traktor, gleich ob mit zwei oder vier Zwillingsreifen, mit oder ohne nach- oder vorlaufender zusätzlicher Verdichtungseinrichtung ausgestattet, eine großflächige Verdichtung von Großsilos vorgenommen werden, wie sie heute z. B. für Biogasanlagen angelegt werden, um eine kontinuierliche Beschickung der Anlagen auch in den Wintermonaten zu ermöglichen. Da auch in der Landwirtschaft stets Silage als Viehfutter in immer größer werdenden Mengen produziert werden muss, werden die Fahrsilos ebenfalls immer größer angelegt, so dass auch in diesem Bereich der wirtschaftliche Einsatz erkennbar ist. Darüber hinaus weist die Erfindung den Vorteil auf, dass jeder Landwirt ein Verdichtungsrad nach der Erfindung herzustellen vermag, also keine besonderen Vorrichtungen notwendig sind, um dieses herstellen zu können. Darüber hinaus kann er Altreifen und alte Felgen hierfür verwenden, die ohnehin in einem landwirtschaftlichen Betrieb vorhanden sind.

Selbstverständlich kann zur weiteren Beschwerung auch vorgesehen sein, dass die Felge mit Beton ausgegossen wird oder in der bekannten Art und Weise mit Betonringen oder -einsätzen bestückt wird. In Weiterbildung der Erfindung ist deshalb vorgesehen, dass beispielsweise in die Felge, beispielsweise bis zur Höhe des Rades, zusätzlich Beton eingegossen wird. In diesem Fall müssen zur Bildung von Durchgangslöchern Rohre, beispielsweise Stahl- oder Kunststoffrohre, eingesetzt werden, damit die langen Schrauben durch die Felgen hindurchgeführt und in die Aufnahmenarbe der Achse eingeschraubt oder an dem Zwillingsrad angeschraubt werden können.

Selbstverständlich lässt sich die Betonmasse auch an der Innenseite der Felge in den gebildeten Hohlraum einbringen. Dies ist aber prinzipiell schon bekannt, wie eingangs dargestellt, führt aber allein nicht zur der gewünschten hochverdichtenden Wirkung des Rades. Hierfür ist es allein ausreichend, wenn auf der Felge der Betonring aufgebracht ist.

Die Verdichtungseinrichtung für ein Fahr- oder Flachsilo für eine landwirtschaftliche Arbeitsmaschine besteht darin, dass an den Rädern mindestens an einer Starrachse der landwirtschaftlichen Arbeitsmaschine über eine Kupplung jeweils ein schwergewichtiges Zwillingsrad aus Beton angebracht ist, wobei das Rad aus Beton mit einem Altreifen überzogen ist und Bohrungen besitzt, durch die die Zwillingsräder mit den Rädern der Arbeitsmaschine verbunden werden können, wobei die Bohrungen im Betonrad mit Metallrohren versehen sind. Die Zwillingsräder besitzen ein Gewicht und eine Auflagefläche, die zusammen mit dem Gewicht der Arbeitsmaschine und der Auflagefläche deren Räder den gewünschten Druck auf die verteilte Silage erzeugen.

Im einfachsten Fall sind die Zwillingsräder nur mit den nichtgelenkten Hinterrädern der landwirtschaftlichen Arbeitsmaschine gekoppelt und besitzen zusammen etwa das Gewicht der Arbeitsmaschine und die gleiche Auflagefläche wie die Räder der Arbeitsmaschine, wodurch der Druck auf die Silage etwa gleich bleibt. In diesem Fall wird die Arbeitsleistung verdoppelt, da die Andruckfläche größer wird.

In der Betonfüllung der Zwillingsräder sind Bohrungen eingebracht, durch die eine Verschraubung erfolgt, so dass eine sichere Verbindung mit den Rädern der Arbeitsmaschine erzeugt wird. Es ist so möglich, die Zwillingsräder direkt mit den Felgen der Räder der Arbeitsmaschine zu verschrauben, da die entsprechenden Bohrungen im Allgemeinen bereits in den Felgen vorhanden sind.

Der entscheidende Vorteil der vorliegenden Erfindung besteht darin, dass der Verdichtungsdruck einer Arbeitsmaschine für eine Silage in einem Fahr- oder Flachsilo angepasst werden kann. Ein weiterer Vorteil entsteht dadurch, dass ein optimaler Verfahrensablauf vom Mähen bis zum Verdichten des Futtermittels gewährleistet wird. Es wird etwa so viel Futtermittel angefahren und auf dem Silo verteilt, wie in einem Arbeitsablauf verdichtet werden kann, so dass keine Leerlaufzeiten entstehen. Beim Verdoppeln der Andruckfläche bei gleichem Verdichtungsdruck wird die Produktivität der Verdichtung verdoppelt und es kann eine Arbeitsmaschine mit dem dazugehörigen Fahrer eingespart werden.

Es ist aber auch möglich, eine Arbeitsmaschine, die einen zu hohen Druck auf die Silage ausübt, durch leichtere Zwillingsräder auf den gewünschten Verdichtungsdruck zu bringen. Die Zwillingsräder bestehen dann aus jeweils einem Betonkern, der zusammen leichter ist als die Arbeitsmaschine. Der gesamte Druck ist dann durch das Gesamtgewicht der mit Zwillingsrädern bestückten Arbeitsmaschine auf die Auflagefläche aller Reifen verteilt. Auf diese Weise kann jede landwirtschaftliche Arbeitsmaschine auch zur Verdichtung der Silage umgerüstet werden. Für die Reifen, mit denen der Betonkern verkleidet ist, können Reifen verwendet werden, die für normale Arbeiten in einem landwirtschaftlichen Betrieb nicht mehr eingesetzt werden können. Dadurch können auch unbrauchbar gewordene Reifen weiter eingesetzt werden.

Die Verwendung von Zwillingsrädern erhöht außerdem die Stabilität des Fahrzeuges auf der Silage.

Die Verdichtungseinrichtung für ein Fahr- oder Flachsilo entsprechend der vorliegenden Erfindung kann für jede Art von Silagen verwendet werden, insbesondere auch für Silagen, die in einer Biogasanlage eingesetzt werden sollen.

Die Erfindung soll nachfolgend an einem Ausführungsbeispiel erläutert werden.

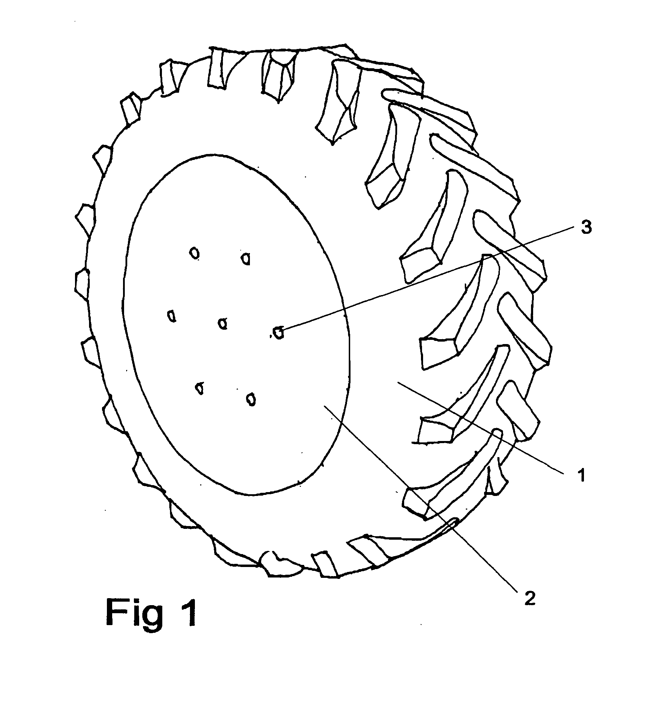

Fig. 1 zeigt die schematische Darstellung eines Zwillingsrades als Verdichtungsrad.

Das Zwillingsrad entsprechend der vorliegenden Erfindung besteht aus einem schwergewichtigen Kern 2 aus Beton, der mit einem herkömmlichen Gummireifen 1 umgeben ist. Der Kern 2 füllt dabei den Reifen 1 völlig aus. In dem schwergewichtigen Kern 2 aus Beton sind Bohrungen 3 vorhanden, durch die das Zwillingsrad mit einer Kupplung am Rad der Arbeitsmaschine oder deren Felge sicher verbunden wird. Ein solches Verdichtungsrad kann z. B. an einer Starrachse der landwirtschaftlichen Arbeitsmaschine als Zwillingsrad befestigt sein. Verfügt die Arbeitsmaschine über eine Knicklenkung, kann an jedes Rad der Arbeitsmaschine ein Zwillingsrad gekoppelt werden.

Grundsätzlich können auch an die Räder der gelenkten Achse Zwillingsräder angebracht werden, jedoch wird die Wendigkeit der Maschine eingeschränkt und die Lenkung stark belastet. Bei Kopplung von entsprechenden Betonrädern mit einer landwirtschaftlichen Arbeitsmaschine ergibt sich ein weiter Bereich der Einstellung des gewünschten Verdichtungsdrucks.

Am einfachsten und preiswertesten ist ein Vollbetonrad herstellbar, indem der Reifen auf eine ebene Fläche aufgelegt wird, konzentrisch ein herausziehbares Fass eingestellt wird und der gesamte durch den Reifen begrenzte Hohlraum, der praktisch einem großen Ring entspricht, mit Beton verfüllt wird. Dabei können Füllsteine mit eingedrückt werden. Das Fass lässt sich aus dem Zentrum herausziehen, so dass nach dem Abbinden und Aushärten des Betons das Rad insgesamt aufgestellt und montiert werden kann. Alle Schraubbolzen stehen aus dem zentralen Loch hervor, so dass darauf eine Befestigungsscheibe gesetzt werden kann, die mit dem Ringflansch stirnseitig das Vollbetonrad übergreift. Anstelle eines einzelnen größeren Zentralloches können aber auch Rohre zur Bildung von Einzellöchern in den Beton eingesetzt sein. Die Montage ist aber bei Verwendung eines Zentralloches wesentlich einfacher.

## Patentansprüche

1. Verdichtungseinrichtung für eine Silage in einem Fahr- oder Flachsilo mit einer landwirtschaftlichen Arbeitsmaschine, mit mindestens einem Beton und einen Reifen aufweisenden Verdichtungsrad , das in einer gabelförmigen Aufnahme oder an einer Zug-/Schubstange drehbar gelagert ist, die an der Arbeitsmaschine nachlaufend oder vorlaufend ankuppelbar ist, oder als Antriebsrad oder als Zwillingsrad an mindestens einer Antriebswelle oder an einem vorhandenen Antriebsrad oder mitlaufenden Rad oder anstelle eines solchen anbringbar ist, **dadurch gekennzeichnet, dass** das Verdichtungsrad ein mit einem Reifen überogenes Beton-vollrad ist und konzentrisch Befestigungsmittel zur Fixierung an der Aufnahmeeinrichtung einer Achse oder an der Felge eines Rades aufweist oder Durchgangslöcher oder ein Zentralloch zur Aufnahme oder Durchführung von Schraubbolzen oder Gewindestangen für die Schraubbefestigung aufweist, wobei im Falle eines Zentralloches in dieses eine Befestigungsplatte mit entsprechenden Bohrungen für die Schraubbolzen oder Gewindestangen einsetzbar ist, welche mit einem Ringflansch auf die Außenseite des Betonrades drückt.

2. Verdichtungseinrichtung nach Anspruch 1, **dadurch gekennzeichnet, dass** das Verdichtungsrad als schwergewichtiges Zwillingsrad ausgebildet ist und in bekannter Weise an dem Antriebsrad oder dem mitlaufenden Rad der landwirtschaftlichen Arbeitsmaschine über Kuppelelemente oder Schraubelemente befestigbar ist und dass der Durchmesser des Verdichtungsrades mit dem Reifen ≥ dem Durchmesser des verbundenen Rades ist.

3. Verdichtungseinrichtung für eine Silage in einem Fahr- oder Flachsilo mit einer landwirtschaftlichen Arbeitsmaschine, mit mindestens einem Beton und einen Reifen aufweisenden Verdichtungsrad , das in einer gabelförmigen Aufnahme oder an einer Zug-/Schubstange drehbar gelagert ist, die an der Arbeitsmaschine nachlaufend oder vorlaufend ankuppelbar ist, oder als Antriebsrad oder als Zwillingsrad an mindestens einer Antriebswelle oder an einem vorhandenen Antriebsrad oder mitlaufenden Rad oder anstelle eines solchen anbringbar ist, **dadurch gekennzeichnet, dass** das Verdichtungsrad aus einer herkömmlichen Felge und einem darauf aufgezogenen Reifen besteht, dass der Hohlraum des Reifens vollständig und gleichmäßig verteilt mit Beton mit oder ohne Steinen als Füllmaterial ausgefüllt ist und dass die Felge des Verdichtungsrades in ihrem Inneren zusätzlich mit Beton ausgefüllt ist, wobei Durchgangslöcher zum Einsetzen von Befestigungs- oder Kopplungsmitteln zum Befestigen an der Achse oder Welle der landwirtschaftlichen Arbeitsmaschine oder an dem jeweils paarig angeordneten mitlaufenden Rad oder dem Antriebsrad der landwirtschaftlichen Arbeitsmaschine vorgesehen sind, durch die die Befestigungsmittel zugänglich sind oder durch die diese hindurchgreifen.

4. Verdichtungseinrichtung nach Anspruch 3, **dadurch gekennzeichnet, dass** die Felge mindestens ein Befüllungsloch aufweist, durch das hindurch die Betonmasse und/oder das Füllmaterial in den Reifenhohlraum drückbar ist.

5. Verdichtungseinrichtung nach Anspruch 3, **dadurch gekennzeichnet, dass** die Betonmasse in der Felge den äußeren Rand des Reifens nicht übersteht und zentrisch ein Durchgangsloch zur Aufnahme eines Lagerzapfens vorgesehen ist.

6. Verdichtungseinrichtung nach einem der vorhergehenden Ansprüche, **dadurch gekennzeichnet, dass** zwei Verdichtungsräder ein Gewicht besitzen, das ≥ dem Gewicht der Arbeitsmaschine ist.

7. Verdichtungseinrichtung nach Anspruch 3, **gekennzeichnet durch** die Verwendung eines Altrades mit einem Altreifen für die Herstellung eines Verdichtungsrades.

## Claims

1. Compacting device for silage in a mobile or flat silo with an agricultural machine, comprising at least one compacting wheel, which comprises concrete and a tyre and which is rotatably mounted in a forked mount or at a pull/push rod, which is couplable to the machine to trail or lead, or can be mounted as a drive wheel or as a twin wheel on at least one drive shaft or on an existing drive wheel or co-running wheel or in place thereof, **characterised in that** the compacting wheel is a concrete solid wheel covered by a tyre and has concentric fastening means for fixing to the mounting device of an axle or on the rim of a wheel or passage holes or a central hole for the reception or passage of studs or threaded rods for the screw fastening, wherein in the case of a central hole in this a fastening plate with corresponding bores for the studs or threaded rods is insertable, the plate pressing by an annular flange on the outer side of the concrete wheel.

2. Compacting device according to claim 1, **characterised in that** the compacting wheel is constructed as a heavyweight twin wheel and is fastenable in known manner to the drive wheel or the co-running wheel of the agricultural machine by way of coupling elements or screw elements and that the diameter of the compacting wheel together with the tyre is greater than or equal to the diameter of the connected wheel.

3. Compacting device for silage in a mobile or flat silo with an agricultural machine, comprising at least one compacting wheel, which comprises concrete and a tyre and which is rotatably mounted in a forked mount or at a pull/push rod, which is couplable to the machine to trail or lead, or can be mounted as a drive wheel or as a twin wheel on at least one drive shaft or on an existing drive wheel or co-running wheel or in place thereof, **characterised in that** the compacting wheel consists of a conventional rim and a tyre drawn thereonto, that the cavity of the tyre is filled completely and in uniform distribution with concrete with or without stones as filling material and that the rim of the compacting wheel is additionally filled in its interior with concrete, wherein passage holes for insertion of fastening or coupling means for fastening to the axle or shaft of the agricultural machine or to the respective co-running wheel arranged in paired manner or to the drive wheel of the agricultural machine are provided, through which holes the fastening means are accessible or engage.

4. Compacting device according to claim 3, **characterised in that** the rim has at least one filling hole through which the concrete mass and/or filling material can be forced into the tyre cavity.

5. Compacting device according to claim 3, **characterised in that** the concrete mass in the tyre does not protrude beyond the outer edge of the tyre and a passage hole for receiving a bearing pin is provided centrally.

6. Compacting device according to any one of the preceding claims, **characterised in that** two compacting wheels have a weight which is greater than or equal to the weight of the machine.

7. Compacting device according to claim 3, **characterised by** the use of an old wheel with an old tyre for producing a compacting wheel.

## Revendications

1. Dispositif d'étanchéité pour un ensilage dans un silo tranché ou plat avec une machine de travail agricole avec au moins une roue d'étanchéité présentant du béton et un pneu qui a un roulement rotatif dans un logement en forme de fourche ou sur une barre de traction/de coulissement qui peut être accouplée en arrière ou en avant à la machine de travail ou qui peut être placée en tant que roue d'entraînement ou en tant que roue jumelle sur au moins un arbre d'entraînement ou sur une roue d'entraînement présente ou une roue parallèle ou à la place d'une telle roue, caractérisé en cela que la roue d'étanchéité surmontée d'un pneu est une roue pleine en béton armé et présente un moyen de fixation concentrique pour la fixation sur le dispositif de logement d'un axe ou sur la jante d'une route ou présente des trous de passage ou un trou central pour le logement ou la réalisation de boulons ou de barres filetées pour la fixation de vis, pour lequel dans le cas d'un trou central, il est possible de placer dans celui-ci une plaque de fixation avec les alésages correspondants pour les boulons ou les barres filetés qui appuie avec une flasque à anneau sur le côté externe de la roue en béton.

2. Dispositif d'étanchéité selon la revendication 1 caractérisé en cela que la roue d'étanchéité est formée en tant que roue jumelle lourde et peut être fixée de manière connue sur la roue d'entraînement ou avec la roue parallèle de la machine de travail agricole via les éléments d'accouplement ou des éléments à vis et que le diamètre de la roue d'étanchéité est avec le pneu ≥ au diamètre de la roue reliée.

3. Dispositif d'étanchéité pour un ensilage dans un silo tranché ou plat avec une machine de travail agricole, avec au moins une roue d'étanchéité présentant du béton et un pneu qui a un roulement rotatif dans un logement en forme de fourche ou sur une barre de traction/de coulissement qui peut être accouplée en arrière ou en avant à la machine de travail ou qui peut être placée en tant que roue d'entraînement ou en tant que roue jumelle sur au moins un arbre d'entraînement ou sur une roue d'entraînement présente ou une roue parallèle ou à la place d'une telle roue, caractérisé en cela que la roue d'étanchéité est composée d'une jante traditionnelle et d'un pneu placé au-dessus, que l'espace creux du pneu est réparti entièrement et régulièrement et est rempli avec du béton et avec ou sans pierres en tant que matériau de remplissage et que la jante de la roue d'étanchéité est remplie à l'intérieur avec en plus du béton, pour lequel des trous de passage pour placer les moyens de fixation ou d'accouplement sont prévus pour la fixation sur l'axe ou l'arbre de la machine agricole ou sur la roue parallèle ordonnée par paire ou sur la roue d'entraînement de la machine de travail agricole grâce auxquels les moyens de fixation sont accessibles et qui leur permettre de bien interagir.

4. Dispositif d'étanchéité selon la revendication 3 caractérisé en cela que la jante présente au moins un trou de remplissage à travers lequel la masse de béton et/ou le matériau de remplissage peut être appuyé dans le creux du pneu.

5. Dispositif d'étanchéité selon la revendication 3 caractérisé en cela que la masse de béton ne dépasse pas dans la jante la roue extérieure du pneu et qu'un trou de passage centrique est prévu pour le logement d'un tourillon.

6. Dispositif d'étanchéité selon l'une des revendications précédentes caractérisé en cela que deux roues d'étanchéité possèdent un bois qui est ≥ au poids de la machine de travail.

7. Dispositif d'étanchéité selon la revendication 3 **caractérisé par** l'utilisation d'une roue ancienne avec un pneu ancien pour la fabrication d'une roue d'étanchéité.
